# EUROPEAN PATENT SPECIFICATION

(11) **EP 4 410 458 B1**
(45) Date of publication and mention of the grant of the patent: **04.11.2026**
(21) Application number: 24184314.3
(22) Date of filing: 15.02.2013
(51) Int. Cl.: B25B 23/00, B23B 31/10, B23B 31/107, B23B 31/22

(54) **TOOL BIT**
WERKZEUGEINSATZ
OUTIL DE TRÉPAN

(30) Priority: 15.02.2012 US 201261599222 P
(43) Date of publication of application: 07.08.2024
(62) Document number(s) of the earlier application(s) in accordance with Art. 76 EPC: 20178951.8 / 3 834 990; 13155401.6 / 2 628 570
(73) Proprietor: Black & Decker Inc., Newark, Delaware 19711 (US)
(72) Inventor: PETERS, Michael P., Lutherville, 21093 (US); BRUNSON, Mark E., Bel Air, 21015 (US); MOSS, Darren B., York, 17408 (US); LEE, David B., Baltimore, 21224 (US); MITCHENER KEFFER, Ruth E., Baltimore, 21224 (US)
(74) Representative: SBD IPAdmin

(56) References cited:
- US-A1- 2008 184 852
- US-A1- 2009 107 304
- US-A1- 2009 139 379
- US-A1- 2010 133 762
- US-A1- 2010 219 594

## Description

The present disclosure relates to power tool and hand tool bits and bit holders and more particularly, to a bit and a quick change bit holder with a floating ring magnet for retaining a fastener to the bit.

This section provides background information related to the present disclosure which is not necessarily prior art.

Auxiliary chucks for power and hand tools have become increasingly common, especially as the need and desirability of wider versatility in the use of power tools and hand tools has increased. Such auxiliary chucks allow the hand or power tool to be used with any of a number of interchangeable bits. This, in turn, has resulted in demands for greater speed, convenience and ease of insertion and removal of tool bits from such chucks.

In one exemplary type of such conventional quick-release chucks, one or more detent balls are positioned within a hollow, barrel-shaped tool bit holder body and are resiliently biased into engagement with a circumferentially-extending groove or recess on the shank of the tool bit. An example of such a ball-type mechanism is disclosed in commonly assigned U.S. Patent No. 5,988,957**.**

In other conventional quick release chucks, a spring biased clip is used to engage the bit within the tool bit holder body. Examples of the spring biased clip design are disclosed in commonly assigned U.S. Patent No. 7,086,813 and 6,929,266.

US 2009/107304 A1 discloses a tool retaining device including a tool stem having a compartment for receiving a tool member, and one or more apertures and one or more openings for receiving one or more detent and one or more locking balls, and a barrel engaged onto the tool stem and having one or more peripheral slots and peripheral recesses for selectively receiving the detents and the locking balls respectively, and the barrel includes a peripheral actuator for actuating the detent to engage with the tool member, and another actuator for actuating the locking ball to rotatably secure the tool member to the tool stem when the peripheral actuator is disengaged from the detent.

This section provides a general summary of the disclosure, and is not a comprehensive disclosure of its full scope or all of its features.

Although the above types of bit holders have been found to function acceptably, the present disclosure provides a simple, relatively inexpensive quick-acting chuck assembly or bit holder that includes a ring magnet at a forward end of the retraction collar to magnetize a fastener and assist in both retaining the fastener to the bit and stabilizing the fastener during its installation. The ring magnet can be supported to allow the magnet to float in a forward direction to engage the fastener or a rearward direction to release the bit for a rapid one handed bit change. The length of the float and the geometry of the magnet are such as to allow for the feature to work with fasteners of different head configurations and with all bit lengths within the normally accepted industry tolerances.

The present invention provides a bit holder assembly as defined in the appended claims.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations, and are not intended to limit the scope of the present disclosure.
FIG. 1 is a perspective view of a bit holder assembly according to the principles of the present disclosure;
FIG. 2 is a longitudinal or axial cross-sectional view of the bit holder assembly of FIG. 1;
FIG. 3 is a longitudinal cross-sectional view similar to that of FIG. 2, but illustrating a tool bit fully inserted in the bit holder assembly;
FIG. 4 is a longitudinal cross-sectional view similar to that of FIG. 3, but illustrating a fastener engaged with the tool bit and the retraction sleeve moved forward for magnetically engaging the fastener;
FIG. 5 is a longitudinal cross-sectional view similar to that of FIG. 2, but illustrating the retraction collar pulled rearward and the tool bit being removed from the bit holder assembly;
FIG. 6 is a perspective view of an alternative bit holder assembly according to the principles of the present disclosure;
FIG. 7 is a longitudinal or axial cross-sectional view of the bit holder assembly of FIG. 6;
FIG. 8 is a side view of a power tool with the bit holder assembly of the present disclosure mounted therein;
FIG. 9 is a side view of a power tool with the bit holder assembly integrally formed therein;
Figure 10 is a perspective view of a bit holder assembly according to a third embodiment;
Figure 11 is a cross-sectional view of the bit holder assembly of figure 10;

Corresponding reference numerals indicate corresponding parts throughout the several views of the drawings.

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

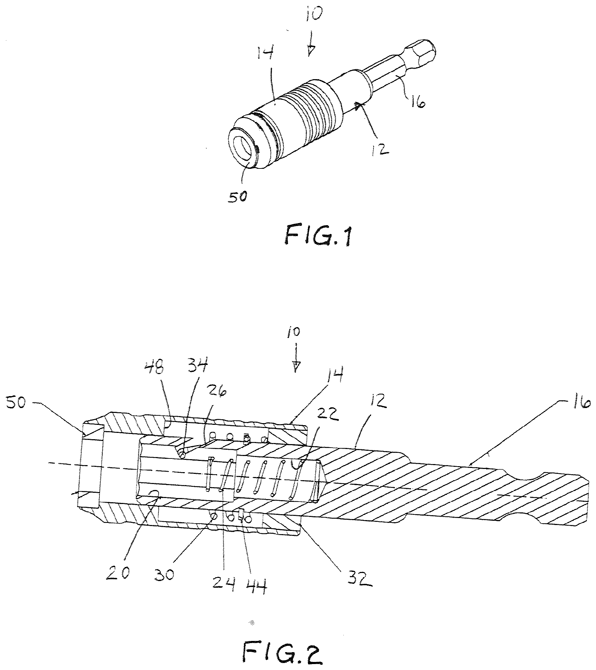

With reference to Figures 1-5, a first embodiment of the quick-change bit holder 10, according to the principles of the present disclosure, will now be described. The bit holder 10 includes a body 12 and retraction collar 14 slidably mounted on the body and retained in place by a sleeve bushing 32, as illustrated in Figure 2. The body 12 can include a hex or polygonal-shaped shank 16 for mounting the bit holder 10 for rotation by a hand tool or a power tool.

With reference to Figure 2, the body 12 also includes a hex or polygonal-shaped socket or bore 20 with the bore 20 opening axially outwardly toward the front or forward end of the bit holder 10. A plunger bore 22 extends axially from the hex-shaped socket or bore 20 toward the rear end of the bit holder assembly 10. Optionally, an ejection spring 24 can be disposed in the plunger bore 22. The body 12 includes an angular slot 26 formed transversely therein, with the slot 26 extending from the radially outer surface of the body 12 in an axially forward and radially inward direction to communicate with the interior of the hex bore or socket 20.

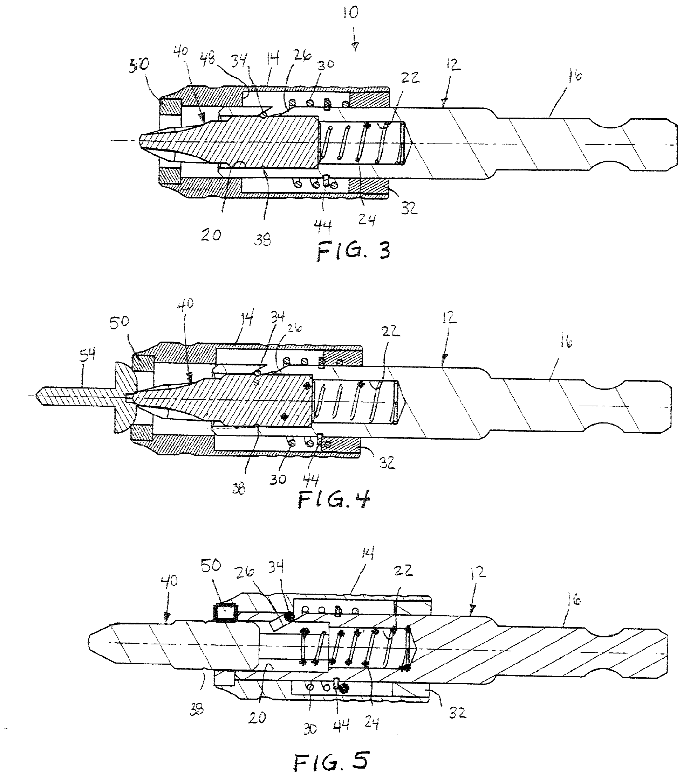

A coil spring 30 surrounds a portion of the body 12 and is disposed between the body 12 and the retraction collar 14. The coil spring 30 abuttingly engages a clip 44 which is received in a groove around a mid-portion of the body 12 and terminates in an integrally formed clip 34 that is disposed in the angular slot 26 and is designed to releasably engage a recess 38 in a hex or polygonal-shaped bit tip 40 as illustrated in Figure 3. An internal annular sleeve 32 attaches to the rear portion of the retraction collar 14. The sleeve 32 can be secured to the collar 14 by adhesive, a press fit, thermal bonding, fasteners, pins, or other known attachment techniques. Received in a groove around a mid-portion of the body 12 is a clip 44 that acts as a stop against the sleeve 32 to limit forward travel of the retractable collar 14. The retractable collar 14 includes a forward shoulder portion 48 that, when pulled rearward, can engage the spring 30 and pull the clip portion 34 of the spring 30 pulling it rearward out of engagement with a bit 40 received in the hex-shaped cavity 20.

The retractable collar 14 is of a non-magnetic material with the exception of a magnetic tip 50 that can be in the form of a ring magnet. Alternative magnetic arrangements can be used including multiple non-ring shaped magnets combined to form a ring-like shape mounted at the tip of the collar 14. Both faces and the internal bore of the magnet, however, may remain accessible.

In operation, as shown in Figure 2, the collar 14 starts in a neutral position with the collar biased forward and the spring clip 34 extending into the bore 20. Next, as shown in Figure 3, a bit 40 is inserted into the bore 20 so that the spring clip 34 engages a notch 38 in the side of the bit 40 to prevent removal of the bit 40 from the bore 20. The bit 40 also compresses the ejection spring 24. The retraction collar 14 remains in the neutral position. Next, as shown in Figure 4, when the bit 40 is used to drive a screw or fastener 54, the collar 14 floats as a result of the magnetic force radiating from the outer face to a forward position until the outer face of the magnet 50 reaches the fastener, enabling the outer face of the ring magnet 50 to magnetically adhere to the screw 54. This occurs before the bearing sleeve 32 engages the stop ring 44. The magnetic force, generating from the inner face of the magnet 50 by design, then draws the fastener 54 and the sleeve 14 jointly towards the body 12, the material of which it is made exhibiting magnet attractable properties resulting in holding the fastener 54 tight against the bit 40. The outer face of the magnet 50 also provides a stable surface to reduce movement of the fastener (wobble) during installation. The surface geometry of the face of the magnet 50 being such as to provide support to fasteners of multiple sizes, shapes, and configurations.

Next, as shown in Figure 5, when the operation has finished and the user desires to remove the bit 40 from the bit holder 10, the user retracts the retraction collar 14 relative to the body 12, causing the spring 30 to compress, and the spring clip 34 to disengage from the bit 40, which allows the ejection spring 24 to attempt to eject the bit 40 from the holder 10. The ejection is, however, limited in movement to the point where the bit notch 38 is clear, and remains as such, of the clip 34 allowing for easy one handed removal, but not to the point where it leaves the bore 20. This controlled ejection is accomplished as a result of the magnetic field generating from the inner bore of the magnet 50 surrounding the bit 40.

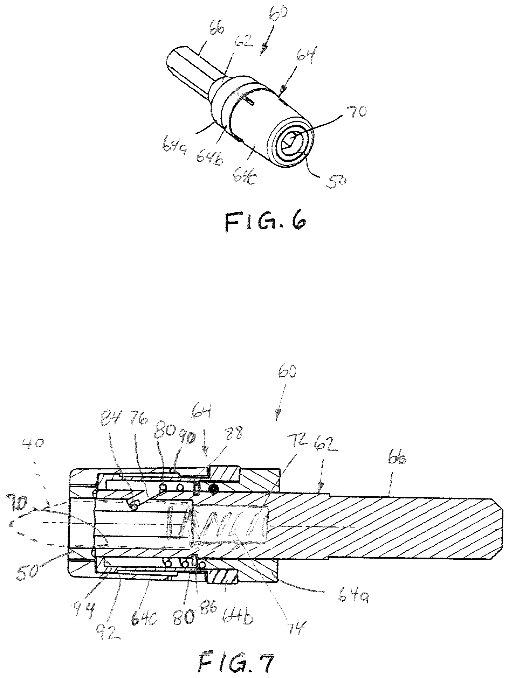

With reference to Figures 6 and 7, an alternative quick change bit holder 60, according to the present disclosure, will now be described. The bit holder 60 includes a body 62 and a retraction collar assembly 64 mounted thereon. The body 62 includes a hex shank 66 and a hex-shaped socket or bore 70 formed in the body 62, with the bore 70 opening axially outwardly toward the front or forward end of the bit holder assembly 60. A plunger bore 72 extends axially from the hex-shaped socket or bore 70 toward the rear end of the bit holder assembly 60. Optionally, an ejection spring 74 can be disposed in the plunger bore 72. The body 62 includes an angular slot 76 similar to the slot 26 as described above. A coil spring 80 having an integral spring clip 84 surrounds the body 62 and is disposed between the body and the clip 84 such that the spring clip 84 is disposed in the angular slot 76 for engaging a bit tip 40 in the manner as discussed above with regard to the previous embodiment.

The retraction collar assembly 64 includes a rear collar 64a, an intermediate collar 64b and a forward collar 64c. A retainer clip 86 is disposed in a recessed groove in the outer surface of the body 62 and is disposed against a forward facing shoulder 88 of the rearward collar 64a. The intermediate collar 64b is press fit onto the rearward collar 64a to trap the retainer clip 86 therebetween. A rearward facing shoulder 90 is provided in a forward direction from the spring 80 on the intermediate collar 64b. The forward collar 64c is slidably supported on a forward end of the intermediate collar 64b and includes a magnetic tip 50 in the form of a magnet ring. The forward collar 64c acts as a floating sleeve and includes a rearward shoulder portion 90 that engages a forward shoulder portion 92 of the intermediate collar 64b to limit the forward travel of the forward collar 64c. The rear end of the forward collar 64c can be stretched over the forward end of the intermediate collar 64b to complete the collar assembly 64. Slots can be provided in the rear end of the forward collar 64c to facilitate assembly on the intermediate collar 64b. Alternatively, the collar could be retained through the usage of a spring ring mounted in a groove on the OD of the intermediate collar 64b and a mating taper and groove in the ID of the forward collar 64c.

In operation, a bit tip 40 can be inserted into the hex-shaped bore 70 of the bit holder body 62. The spring clip 84 engages a recess 38 in the bit tip 40 in order to retain the bit tip 40 within the bore 70. The forward collar 64c is able to float in a forward direction to engage a fastener that is engaged by the bit tip 40 in order to magnetically retain the fastener to the bit tip 40. When the fastener is inserted and the user wishes to remove the bit tip 40, the retraction collar 64 can be pulled in a rearward direction so that rearward facing shoulder 94 of intermediate collar 64c pulls rearward on the spring 80 to disengage the spring clip portion 84 from the recess 38 in the bit tip 40. The magnetic sleeve on this bit holder 60 works just like the other in that it grabs the screw and pulls it back towards the body 62 and against the bit while reducing wobble.

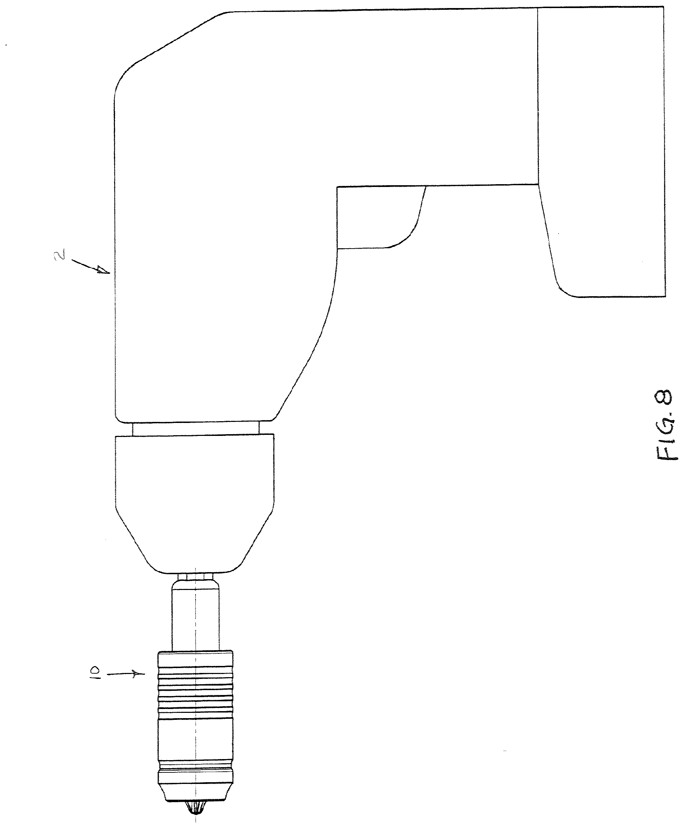

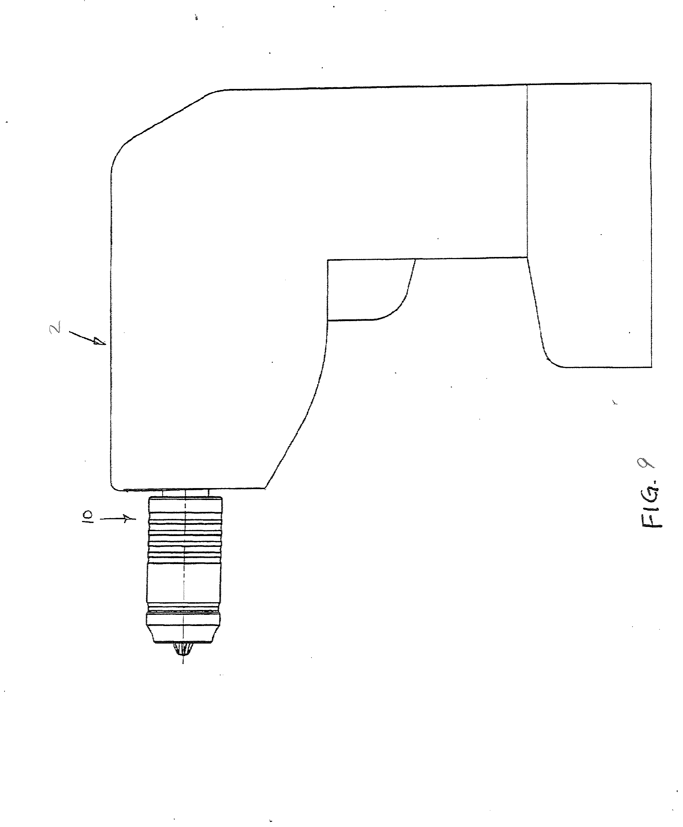

It should be understood that in each of the embodiments described herein, the bit holder 10, 60 can be mounted to a drill 2 as shown in Figure 8 by inserting the hex-shaped shank 16, 66 into a chuck device. Alternatively, the bit holder of the present disclosure can be integrally constructed into the chuck device of the power tool 2, as shown in Figure 9. Furthermore, although the present disclosure discloses a spring clip 34, 84 that is integral with the spring 30, 80, other arrangements of spring clips that are separate from the coil spring have also been utilized and can be utilized with the present disclosure. Examples of other arrangements include U.S. Patent Nos. 7,086,813; 6,929,266; 6,261,035; 6,261,035, and 5,988,957 which are incorporated herein by reference in their entirety. Furthermore, the use of a ball detent mechanism is also known in the art, and can be used in place of the integral spring clip and spring arrangement of the present disclosure. Further, other previous bit holder designs can be modified to include a ring magnet near the front of the outer actuation sleeve to allow the magnet and/or actuation sleeve to float forward to magnetize a fastener during operation.

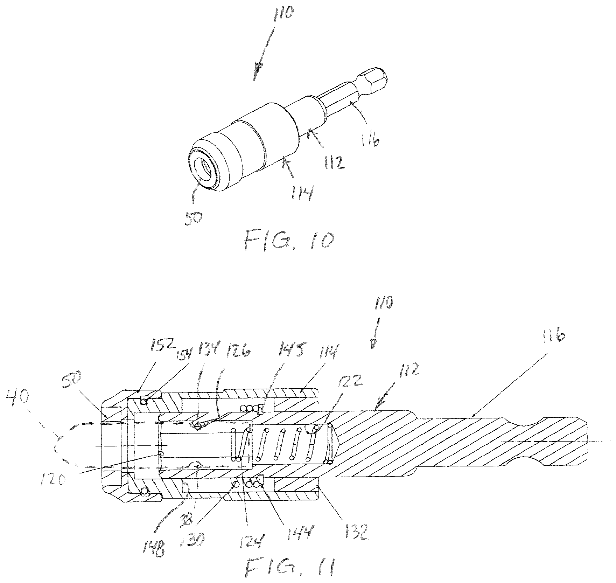

With reference to Figures 10 and 11, a third embodiment of the quick-change bit holder 110, according to the principles of the present disclosure, will now be described. The bit holder 110 includes a body 112 and a retraction collar 114 slidably mounted on the body 112 and retained in place by a sleeve bushing 132, as illustrated in Figure 11. The body 112 can include a hex or polygonal-shaped shank 116 for mounting the bit holder 110 for rotation by a hand tool or a power tool.

With reference to Figure 11, the body 112 also includes a hex or polygonal-shaped socket or bore 120 with the bore 120 opening axially outwardly toward the front end of the bit holder 110. A plunger bore 122 extends axially from the hex-shaped socket or bore 120 toward the rear end of the bit holder assembly 110. Optionally, an ejection spring 124 can be disposed in the plunger bore 122. The body 112 includes an angular slot 126 formed transversely therein, with the slot 126 extending from the radially outward surface of the body 112 in and axially forward and radially inward direction to communicate with the interior of the hex bore or socket 120.

A coil spring 130 surrounds a portion of the body 112 and is disposed between the body 112 and the retraction collar 114. The coil spring 130 abuttingly engages a clip 144 which is received in a groove 145 around a mid-portion of the body 112 and terminates as an integrally formed clip 134 that is disposed in the angular slot 126 and is designed to releasably engage a recess 38 in a hex or polygonal-shaped bit tip 40 in the same manner as the embodiment illustrated in Figures 3 and 4. The internal annular sleeve 132 attaches to the rear portion of the retraction collar 114. Sleeve 132 can be secured to the collar 114 by adhesive, a press fit, thermal bonding, fasteners, pins, or other known attachment techniques. The clip 144 acts as a stop against the sleeve 132 to limit for travel of the retractable collar 114. Retractable collar 114 includes a forward shoulder portion 148 that when pulled rearward can engage the spring 130 and pull the clip portion 134 of the spring 130, pulling it rearward out of engagement with a bit 40 received in the hex-shaped cavity 120.

Retractable collar 114 supports a removable magnet ring 150 that is supported by a removable sleeve 152. Removable sleeve 152 is secured to the retractable collar 114 by a retainer such as an O-ring or bull nose ring 154 that is received in a groove in a forward portion thereof. The sleeve 152' is press fit over top of the retainer ring in order to releasably secure the sleeve 152 to the retraction collar 114.

The operation of the bit tip holder 110 as described is the same as the bit tip holder 10 as described above.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure, which is defined in the appended claims.

## Claims

1. A bit holder assembly for a rotary tool (10, 60, 110), comprising:
a body (12, 62, 112) having a shank (16, 66, 116) at its rearward end and a coaxial socket (20, 70, 120) formed at a second end to allow a tool bit to be inserted therein, said body having an opening (26, 76, 126) formed in the body in communication with said socket;
a retraction collar (14, 64b, 114) slidably disposed on said body;
a coil spring (30, 80, 130) configured to bias the retraction collar forwardly;
a retainer (34, 84, 134) held in a bottom of said opening by one of said retraction collar and said coil spring; and
a ring magnet (50) disposed at a forward end of the retraction collar;
wherein the retraction collar (14, 64b, 114) is moveable among:
(i) a neutral position in which the retainer (34, 84, 134) engages the tool bit to retain the tool bit in the socket; and
(ii) a retracted position rearward of the neutral position, wherein the retraction collar (14, 64b, 114) is configured to slide rearwardly to the retracted position to compress the coil spring (30, 80, 130) and allow the retainer (34, 84, 134) to retract back up the opening (26, 76, 126) to disengage the retainer from the tool bit and allow removal of the tool bit from the socket (20, 70, 120);
**characterised in that** the retraction collar (14, 64b, 114) is further movable to:
(iii) a forward position forward of the neutral position, wherein the retraction collar (14, 64b, 114) is configured to float forward from the neutral position to the forward position without being acted on by the coil spring (30) to allow the ring magnet (50) to engage and magnetize a fastener to retain the fastener to the tool bit.

2. The bit holder assembly according to claim 1, wherein the ring magnet (50) is attached directly to said retraction collar (14, 64b, 114).

3. The bit holder assembly according to claim 1 or claim 2, wherein said opening (26, 76, 126) in the body (12, 62, 112) is an angular slot (26, 76 126) formed in the body and said coil spring (30, 80, 130) biases said retainer (34, 84, 134) toward a bottom of said angular slot.

## Patentansprüche

1. Spitzenhalteranordnung für ein Drehwerkzeug (10, 60, 110), umfassend:
einen Körper (12, 62, 112), der an seinem rückseitigen Ende einen Schaft (16, 66, 116) und eine Koaxialbuchse (20, 70, 120), die an einem zweiten Ende geformt ist, aufweist, um es zu erlauben, dass eine Werkzeugspitze darin eingesetzt wird, wobei der Körper eine Öffnung (26, 76, 126) aufweist, die in dem Körper in Kommunikation mit der Buchse geformt ist;
einen Rückziehbund (14, 64b, 114), der gleitend an dem Körper angeordnet ist;
eine Spiralfeder (30, 80, 130), die konfiguriert ist, um den Rückziehbund nach vorwärts vorzuspannen;
eine Halterung (34, 84, 134), die in einem unteren Teil der Öffnung von einem von dem Rückziehbund und der Spiralfeder gehalten wird; und
einen Ringmagneten (50), der am vorderen Teil des Rückziehbunds angeordnet ist;
wobei der Rückziehbund (14, 64b, 114) beweglich ist zwischen:
(i) einer neutralen Position, in der die Halterung (34, 84, 134) in die Werkzeugspitze eingreift, um die Werkzeugspitze in der Buchse zurückzuhalten; und
(ii) einer zurückgezogenen Position hinter der neutralen Position, wobei der Rückziehbund (14, 64b, 114) konfiguriert ist, um rückwärts in die zurückgezogene Position zu gleiten, um die Spiralfeder (30, 80, 130) zusammenzudrücken und es der Halterung (34, 84, 134) zu ermöglichen, sich durch die Öffnung (26, 76, 126) zurückzuziehen, um die Halterung von der Werkzeugspitze zu lösen und Entfernen der Werkzeugspitze aus der Buchse (20, 70, 120) zu ermöglichen;
**dadurch gekennzeichnet, dass** der Rückziehbund (14, 64b, 114) weiter beweglich ist in:
(iii) eine vordere Position vor der neutralen Position, wobei der Rückziehbund (14, 64b, 114) konfiguriert ist, um aus der neutralen Position in die vordere Position zu gleiten, ohne von der Spiralfeder (30) beaufschlagt zu werden, um dem Ringmagneten (50) zu ermöglichen, in ein Befestigungselement einzugreifen und es zu magnetisieren, um das Befestigungselement an der Werkzeugspitze zurückzuhalten.

2. Spitzenhalteranordnung nach Anspruch 1, wobei der Ringmagnet (50) direkt am Rückziehbund (14, 64b, 114) befestigt ist.

3. Spitzenhalteranordnung nach Anspruch 1 oder Anspruch 2, wobei die Öffnung (26, 76, 126) in dem Körper (12, 62, 112) ein winkelförmiger Schlitz (26, 76 126) ist, der in dem Körper gebildet ist, und die Spiralfeder (30, 80, 130) die Halterung (34, 84, 134) zu einem unteren Teil des winkelförmigen Schlitzes hin vorspannt.

## Revendications

1. Ensemble porte-embout pour outil rotatif (10, 60, 110), comprenant :
un corps (12, 62, 112) présentant une tige (16, 66, 116) à son extrémité arrière et une douille coaxiale (20, 70, 120) formée à une seconde extrémité pour permettre à un embout d'outil d'y être inséré, ledit corps présentant une ouverture (26, 76, 126) formée dans le corps en communication avec ladite douille ;
un collier de rétraction (14, 64b, 114) disposé de manière coulissante sur ledit corps ;
un ressort hélicoïdal (30, 80, 130) configuré pour pousser le collier de rétraction vers l'avant ;
un dispositif de retenue (34, 84, 134) maintenu au fond de ladite ouverture par l'un dudit collier de rétraction et dudit ressort hélicoïdal ; et
un aimant annulaire (50) disposé à l'extrémité avant du collier de rétraction ;
dans lequel le collier de rétraction (14, 64b, 114) est mobile entre :
(i) une position neutre, dans laquelle le dispositif de retenue (34, 84, 134) s'engage avec l'embout d'outil pour maintenir celui-ci dans la douille ; et
(ii) une position rétractée en arrière de la position neutre, dans laquelle le collier de rétraction (14, 64b, 114) est configuré pour glisser vers l'arrière jusqu'à la position rétractée afin de comprimer le ressort hélicoïdal (30, 80, 130) et permettre au dispositif de retenue (34, 84, 134) de se rétracter dans l'ouverture (26, 76, 126) pour désengager le dispositif de retenue de l'embout d'outil et permettre le retrait de l'embout d'outil de la douille (20, 70, 120) ;
**caractérisé en ce que** le collier de rétraction (14, 64b, 114) est en outre mobile vers :
(iii) une position avant en avant de la position neutre, dans laquelle le collier de rétraction (14, 64b, 114) est configuré pour flotter vers l'avant de la position neutre à la position avant sans être actionné par le ressort hélicoïdal (30) pour permettre à l'aimant annulaire (50) de s'engager et magnétiser un élément de fixation pour retenir ce dernier sur l'embout d'outil.

2. Ensemble porte-embout selon la revendication 1, dans lequel l'aimant annulaire (50) est directement fixé audit collier de rétraction (14, 64b, 114).

3. Ensemble porte-embout selon la revendication 1 ou la revendication 2, dans lequel ladite ouverture (26, 76, 126) dans le corps (12, 62, 112) est une fente angulaire (26, 76, 126) formée dans le corps et ledit ressort hélicoïdal (30, 80, 130) pousse ledit dispositif de retenue (34, 84, 134) vers le fond de ladite fente angulaire.
